# EUROPEAN PATENT APPLICATION

(11) **EP 1 013 160 A1**
(43) Date of publication of application: **28.06.2000**
(21) Application number: 98830777.3
(22) Date of filing: 23.12.1998
(51) Int. Cl.: A01D 46/26

(54) **Gripping element in tree shaking devices**

(71) Applicant: Cifarelli S.r.l., 27058 Voghera (Pavia) (IT)
(72) Inventor: Cifarelli, Raffaele, 27058 Voghera (Pavia) (IT)
(74) Representative: Sutto, Luca, Ing.

(57) **Abstract**

It is described a gripping element in tree shaking devices which comprises a C-shaped main body (4) defining a cavity (5) in which the branch is housed during the shaking step. A pair of rollers (15) associated with the central portion of the body (4) and a first and a second rolling elements (6a, 6b) associated with the first transverse locating portion (8) and the second transverse locating portion (9) respectively, enable reduction of frictions during the branch-shaking step.

## Description

The present invention relates to a gripping element in tree shaking devices.

It is known that, in order to carry out an efficient shaking of trees for picking up olives, walnuts, hazelnuts, fruit, hand-held shaking devices are presently used which are operated by a power unit that is typically intended for moving a shaking rod directed and positioned by an operator in such a manner that the necessary shaking operation is generated on the branches of the tree to be treated.

In more detail, shaking devices presently in use comprise a support frame inside which the power unit is housed; said power unit, through a connecting rod-crank driving mechanism, transmits its rotatory motion to an oscillating rod that, in turn, carries a hook at the end portion thereof which is adapted to act by grip on the branch of the tree to be submitted to shaking.

After conveniently fastening the hook to the branch to be shaken, through a normal manual command the operator can drive the rod in an oscillating motion and therefore cause fall of olives, walnuts, hazelnuts, fruit or the like, depending on the particular situation.

Clearly the oscillating rod during its operation will have to transmit a very vigorous reciprocating action to the hook-shaped gripping element and therefore the branch, in order to obtain a quick and optimal shaking of the branch itself and consequently of the tree submitted to treatment.

For the above reason, in particular the hook-shaped gripping element associated with the rod end is subjected to heavy loads and more specifically to very marked wear actions due to abrasion.

It is in fact to note that the gripping element or hook is usually E-shaped and receives the branch submitted to shaking in its engagement cavity; said branch during the oscillating action imparted to the rod of the shaking device, performs a relative movement within the engagement cavity of the hook giving rise to strong rubbing actions, abrasions and impacts against the surfaces of the gripping element.

For the above reason, presently gripping elements or hooks associated with the rods of shaking devices at the end portion thereof are made of appropriate plastic materials, typically elastomer materials, capable of offering a good resistance to wear even if submitted to the above described stresses over long periods of time.

While this type of choice has been widely adopted, it is however to point out that the important overheating often produced at the active surfaces of the gripping element causes such degrees of wear that frequent replacements of the hook element are required, which brings about important costs both for the pieces to be replaced and for the fact that the shaking work is to be stopped.

Beside the above mentioned drawbacks, it is also to note that the strong frictions existing between the gripping element and the branch submitted to shaking can undesirably damage the branch itself, above all when the hook-shaped gripping element shows surface unevennesses due to a high decay in terms of wear.

Under this situation, it is a fundamental aim of the present invention to offer a new gripping element in tree shaking devices capable of substantially solving all mentioned drawbacks.

In particular, it is a fundamental aim of the invention to offer a gripping element to be associated with tree shaking devices which is capable of greatly reducing friction and mutual-abrasion actions between the gripping element and the branch, which are typical of traditional technical solutions.

The foregoing and further aims that will become more apparent during the following description are substantially achieved by a gripping element in tree shaking devices in accordance with claim 1.

Further features and advantages will be best understood from the detailed description of some embodiments of a gripping element in accordance with the present invention. Such a description will be taken hereinafter with reference to the accompanying drawings, given by way of non-limiting example, in which:
- Fig. 1 is a perspective view showing a shaking device as a whole;
- Fig. 2 is a side view partly in section of a gripping element to be associated with the shaking device in Fig. 1 in accordance with the present invention;
- Fig. 3 is a side view partly in section showing a possible alternative embodiment of a gripping element in accordance with the invention;
- Fig. 4 is a side view of another possible alternative embodiment of a gripping element in accordance with the invention; and
- Fig. 5 is a section taken along line V-V in Fig. 4.

With reference to the drawings, a gripping element in tree shaking devices in accordance with the present invention has been generally identified by reference numeral 1.

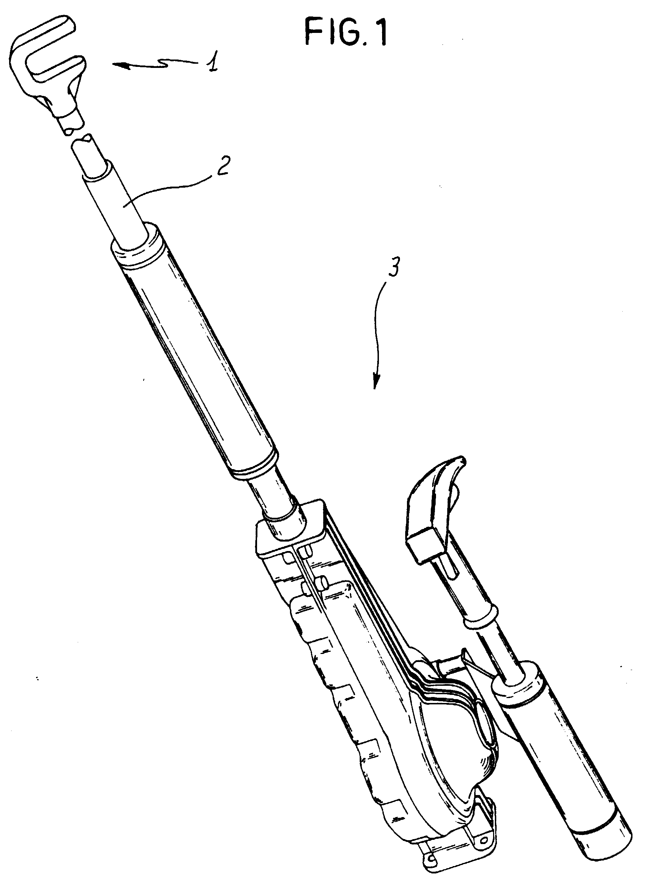

The gripping element 1 is associated with a movable rod 2 of a shaking device 3, at an end thereof, as shown in Fig. 1.

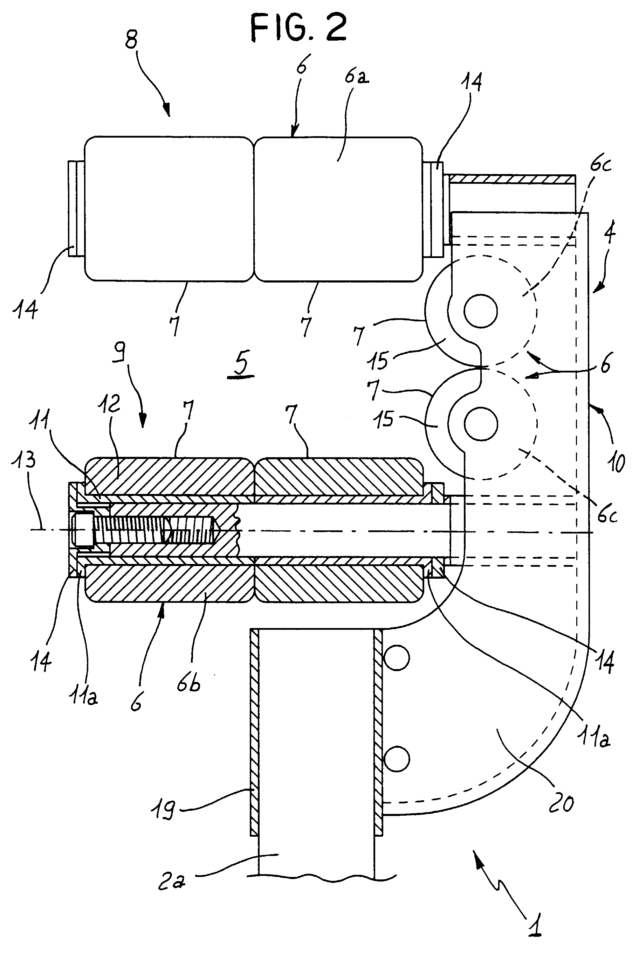

In more detail, the gripping element will be able to be fastened to the movable rod 2 or to be engaged therewith in a removable manner, by clamping means for example, as diagrammatically shown in Fig. 2.

More specifically, the gripping element 1 comprises a main body to be fitted to an operating end 2a of the movable rod 2 and defining at least one shaped cavity 5 arranged to receive a branch of a tree to be submitted to shaking.

Under operating conditions the branch to be shaken is disposed within the shaped cavity 5 and, following the reciprocating movement imparted to the movable rod, it receives reciprocating actions causing shaking thereof, from the main body 4.

Advantageously, at the main body 4 and more specifically at the body surface delimiting the shaped cavity and turned towards the branch to be shaken, at least one movable portion 7 having an active surface 7 intended for acting on said branch by contact is provided.

Practically, the movable portion or portions 6 are connected with the main body and such shaped that they can move relative to the main body itself as a result of a mechanical interaction between the active surface of the movable portion and the surface of the branch submitted to shaking.

As viewed from the accompanying drawings, the main body preferably comprises a first locating portion 8 extending transversely of the movable rod 2 and a second locating portion 9 extending transversely of the movable rod as well and spaced apart from the first locating portion so as to define said shaped cavity 5 therewith, in which cavity the branch to be shaken is fitted.

The first and second locating portions are spaced apart from each other by interposition of a central portion 10 substantially extending away from the movable rod. Preferably, the first and second locating portions 8 and 9 are parallel to each other and perpendicular to the central portion 10 so that they take a C-shaped conformation.

As shown in the accompanying drawings, associated with the first locating portion 8 is a first movable portion 6a and associated with the second locating portion 9 is a respective second movable portion 6b.

Preferably both the first and second movable portions 6a, 6b are provided with an active surface having the geometry of a solid of revolution and are rotatably in engagement with the main body in such a manner that their rotation axis is transverse to the shaking axis substantially defined by the movable rod 2; practically, portions 6a and 6b define rolling elements with a rotation axis transverse and preferably orthogonal to the movable rod 2.

In more detail, the surface defined by the first and second movable portions is of substantially cylindrical conformation and is such arranged that its axis is orthogonal to the shaking axis, so that possible actions directed tangentially of the active surface 7 of these movable portions give rise to a rotation of said portions around their own axis, which will involve a reduction in the rubbing actions and therefore in wear.

From a construction point of view, both the first and second movable portions 6a, 6b comprise a bush 11 rotatably mounted on the respective locating portion and a protection cover 12 externally fitted on the bush.

The bush, made of an antifriction material, is of tubular conformation and can rotate around its own axis on a pivot pin 13 rigidly connected to the central portion 10 of the main body 4.

Obviously the protection cover has a tubular conformation as well and is made of a plastic material, preferably an elastomer material, being fitted on the bush of antifriction material by interference fit so that a possible relative sliding between bush and cover can be reduced to a minimum.

Alternatively, the protection cover can be made of natural or synthetic rubber.

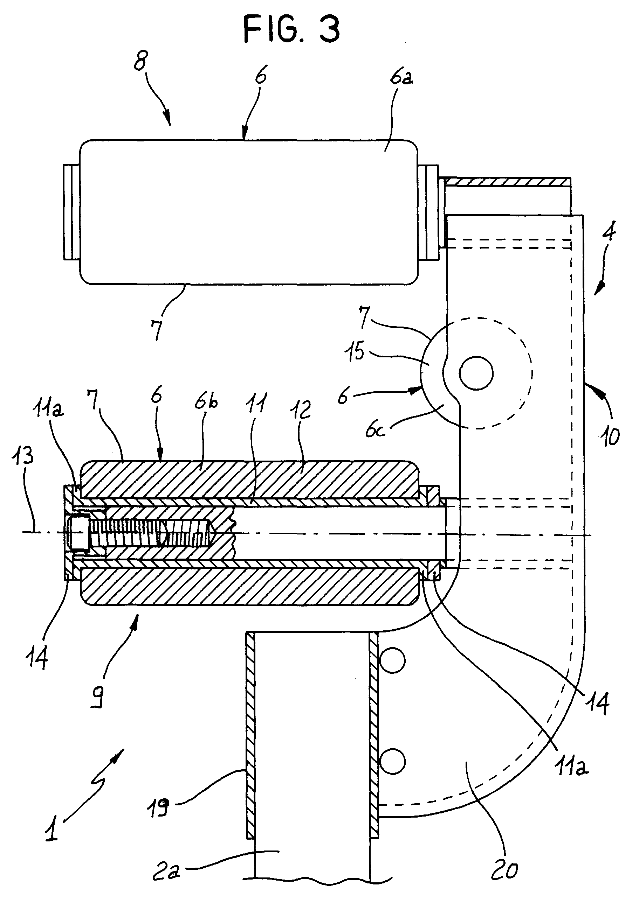

As can be viewed from the accompanying drawings, the cover of elastomer material may be of one piece construction (Fig. 3) or may consist of two or more cylindrical portions disposed mutually in side by side relationship and coaxially mounted on each rotating bush (Fig. 2).

In order to axially lock both the rotating bush 11 and the relative cover 12, each of said first and second locating portions comprises at least one axial lock element 14 engaged at a free end of the locating portions 8 and 9 and having a radial bulkiness capable of preventing the bush from slipping off the protection cover.

In the embodiment illustrated in the accompanying drawings (Figs. 2 and 3) the rotating bush of cylindrical conformation is provided to have annular shoulders 11a for cover holding at opposite axial ends thereof; also provided externally of said shoulders are rings 14 for axially locking the bush itself on the respective pivot pins.

Advantageously, a third movable portion 6c is also provided at the central portion 10 of the main body 4, which portion 6c too preferably has its active surface 7 having the geometry of a solid of revolution.

The third movable portion too is rotatably engaged on the main body in such a manner that its rotation axis is transverse to the shaking axis defined by the movable rod.

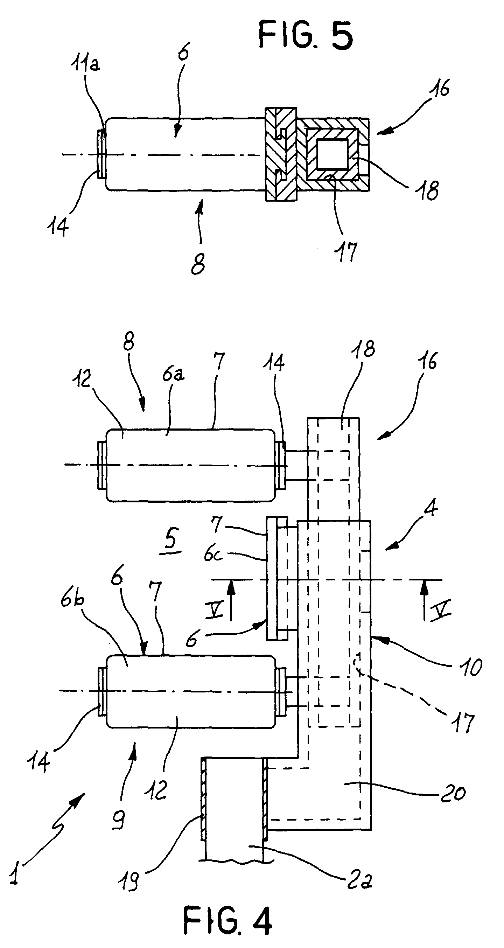

In this way, due to the relative oscillation between the gripping element and the branch to be submitted to shaking, possible actions directed parallelly of the shaking axis will give rise to displacement (Fig. 4) or rotation (Figs. 2 and 3) of the third movable portion 6c without causing too strong abrasion actions due to rubbing.

From a construction point of view the third movable portion comprises one or more rollers 15 rotatably engaged at the central portion 4.

Shown in Fig. 3 is an embodiment in which a single roller 15 is associated with the central portion, the roller axis being transverse and in particular orthogonal to the shaking axis and the rotation axis of the first and second movable portions; on the contrary, shown in Fig. 2 is the case in which two rollers 15 are provided; they are disposed mutually in side by side relationship and are rotatably in engagement with the central portion 10 according to rotation axes parallel to each other and orthogonal to both the shaking rod and the rotation axis of the first and second movable portions 6a and 6b.

According to a further aspect of the invention (Figs. 4 and 5), it is to point out that the gripping element comprises adjustment means 16 arranged to vary the mutual position between the first locating portion 8 and the second locating portion 9, so that the sizes of the gripping element can be easily adapted to the typology and sizes of the branch to be submitted to shaking.

In more detail, the adjustment means is operatively interposed between at least one of the locating portions and the central body and operates in such a manner that the distance between the centres of the first and second locating portions can be varied.

As can be seen in the embodiment referred to in Figs. 4 and 5, the adjustment means may comprise a sliding seat 17 substantially formed in the central portion 10 and arranged to receive a guide region 18 of the first or second locating portion.

In this specific case the first locating portion 8 is provided to move relative to the second locating portion 9; therefore in this case the guide region 18 is associated with the first locating portion itself.

Means for fastening the guide region to the desired operating position relative to the sliding seat is also provided.

This fastening means is not shown in the accompanying drawings but it may comprise a peg for example, which is active transversely of the guide region and sliding seat, or other similar means.

Finally, it is to note that, as previously mentioned, the gripping element may be removably fastened or connected to an end of the oscillating rod. In particular, the main body comprises an attachment portion 19 located at a lower position relative to the above described locating portions 8 and 9 and connected to the central portion through a connecting length 20 for example, of curved or angled shape.

The attachment portion can be then fastened by welding for example or removably secured by a clamp engagement, by means of transverse pegs or other similar systems, to the free end 2a of the oscillating rod.

The invention achieves important advantages.

It is in fact to note that during the shaking step the relative movements between the gripping element and the branch submitted to shaking result in rotations or displacements of the movable portion or portions, thus bringing about a reduction in the rubbing action between the branch and the active surfaces of said movable portions.

In this way, the abrasive actions between the surfaces of the branch and the gripping element intended for acting on the branch by contact are surely reduced as compared with traditional solutions, which will result in a greater duration of life of the gripping element and smaller damage to the branch submitted to treatment.

This obviously also has a practical advantage, since frequent interruptions of work by the operators for carrying out replacement of too much damaged gripping elements are no longer necessary.

A further advantageous aspect is given by the fact that, should the operator actuate the shaking device with the oscillating rod not orthogonal to the branch to be shaken, rotation of the first and second movable portions would promote a displacement of the oscillating rod towards the condition of perpendicularity to the branch, which treatment further reduces rubbing and, in addition, makes the action imparted by the shaking device more efficient.

Surely this type of result cannot be achieved with gripping elements devoid of movable portions, that is with portions that during shaking cannot be shifted from the engagement region initially taken on the branch.

Provision of an adjustable distance between the movable portions is also advantageous because in this way the conformation of the gripping element can be adapted to the particular branch to be submitted to treatment, thereby avoiding useless wear or damages to the branch itself.

Finally, use of a movable portion that can be disengaged from the rod end is advantageous in terms of servicing and logistic management of the shaking device as a whole.

## Claims

1. A gripping element in tree shaking devices comprising:
- a main body (4) to be connected to a movable rod (2) of a shaking device (3), said main body defining at least one shaped cavity (5) for engagement of a branch of a tree to be submitted to shaking,
characterized in that it comprises at least one movable portion (6) in engagement with the main body and having an active surface (7) turned towards said shaped cavity (5) which is intended for acting on said branch by contact.

2. A gripping element as claimed in claim 1, characterized in that said movable portion (6) is such shaped and mounted on the main body (4) that it is movable relative to said body due a mechanical interaction between the branch and said active surface.

3. A gripping element as claimed in anyone of the preceding claims, characterized in that the main body (4) comprises a first locating portion (8) extending transversely of said movable rod (12), and a second locating portion (8) also extending transversely of the movable rod and spaced apart from the first locating portion so as to define, in cooperation therewith, the shaped cavity (5) for engagement of said branch of the tree to be submitted to shaking.

4. A gripping element as claimed in claim 3, characterized in that the main body (4) comprises a central portion (10) of interconnection between said first and second locating portions (8 and 9), said central portion substantially extending away from said movable rod.

5. A gripping element as claimed in claim 3, characterized in that it comprises a first movable portion (6a) connected to the first locating portion (8) and, preferably, at least one second movable portion (6b) connected to the second locating portion (9)

6. A gripping element as claimed in claim 5, characterized in that said first and optionally said second movable portions (6a, 6b) have an active surface (7) having the geometry of a solid of revolution, said portions being rotatably mounted on the main body so that their axis of rotation is transverse to the shaking axis substantially defined by said movable rod (2).

7. A gripping element as claimed in claim 4, characterized in that it comprises at least one third movable portion (6c) joined to said central portion (10) of the main body.

8. A gripping element as claimed in claim 5 or in claim 6, characterized in that said first and/or said second movable portions comprise a bush (11) rotatably mounted on the respective locating portion (8 and 9) and a protection cover (12) externally fitted on said bush.

9. A gripping element as claimed in claim 7, characterized in that said bush (11) has a tubular conformation and is made of an antifriction material, said protection cover (12) being of tubular conformation as well, and being made of plastic material, preferably elastomer material, or of rubber.

10. A gripping element as claimed in claim 7, characterized in that the third movable portion (6c) has at least one active surface (7) having the geometry of a solid of revolution, said portion (6c) being rotatably mounted on the main body in such a manner that its rotation axis is transverse to the shaking axis substantially defined by said movable rod.

11. A gripping element as claimed in claim 10, characterized in that the third movable portion (6c) comprises at least one roller (15) rotatably engaged at said central portion (10).

12. A gripping element as claimed in claim 11, characterized in that the third movable portion preferably comprises at least one pair of rollers (15) of parallel axes mutually disposed in side by side relationship, both rotatably in engagement with said central portion.

13. A gripping element as claimed in anyone of the preceding claims, characterized in that it comprises adjustment means (16) for varying the mutual position between the first locating portion (8) and the second locating portion (9).

14. A gripping element as claimed in claim 13, characterized in that said adjustment means (16) is operatively interposed between at least one of said locating portions (8 and 9) and said central portion (10), said adjustment means operating in such a manner that the distance between the centres of the first and second locating portions can be substantially varied.

15. A gripping element as claimed in claim 14, characterized in that the adjustment means (16) comprises at least one sliding seat (17) substantially formed in said central portion (10) and arranged to receive a guide region (18) of said first or second locating portions and means for fastening said guide region to the desired operating position.

16. A gripping element as claimed in anyone of the preceding claims, characterized in that the main body (4) comprises an attachment portion (20) arranged to be removably mounted to one end (2a) of the movable rod associated with the shaking device.

17. A gripping element as claimed in claim 8, characterized in that the protection cover (12) comprises at least two cylindrical portions disposed mutually in side by side relationship and coaxially mounted on the rotating bush.

18. A gripping element as claimed in claim 17, characterized in that it comprises an axial locking element (11) engaged with a free end of said first and said second locating portions for preventing said bush and said protection cover from slipping off the respective locating portion.
